# EUROPEAN PATENT SPECIFICATION

(11) **EP 2 990 764 B1**
(45) Date of publication and mention of the grant of the patent: **20.06.2018**
(21) Application number: 14832458.5
(22) Date of filing: 30.06.2014
(51) Int. Cl.: G06F 3/0481, G08G 1/0962, G01C 21/36

(54) **TRAFFIC INFORMATION NOTIFICATION SYSTEM, TRAFFIC INFORMATION NOTIFICATION DEVICE, TRAFFIC INFORMATION NOTIFICATION METHOD, AND COMPUTER PROGRAM**
VERKEHRSINFORMATIONSBENACHRICHTIGUNGSSYSTEM, VERKEHRSINFORMATIONSBENACHRICHTIGUNGSVORRICHTUNG, VERKEHRSINFORMATIONSBENACHRICHTIGUNGSVERFAHREN UND COMPUTERPROGRAMM
SYSTÈME, DISPOSITIF, PROCÉDÉ ET PROGRAMME INFORMATIQUE DE NOTIFICATION D'INFORMATIONS DE TRAFIC

(30) Priority: 29.07.2013 JP 2013156824
(43) Date of publication of application: 02.03.2016
(73) Proprietor: Aisin AW Co., Ltd., Anjo-shi, Aichi 444-1192 (JP); TOYOTA JIDOSHA KABUSHIKI KAISHA, Toyota-shi, Aichi-ken 471-8571 (JP)
(72) Inventor: KACHI, Shinji, Anjo-shi Aichi 444-1192 (JP); KURODA, Nobuhide, Anjo-shi Aichi 444-1192 (JP); UCHIDA, Jiro, Anjo-shi Aichi 444-1192 (JP); ISHIHARA, Fuminari, Toyota-shi Aichi 471-8571 (JP)
(74) Representative: TBK
(86) International application number: PCT/JP2014/067346
(87) International publication number: WO 2015/015978

(56) References cited:
- EP-A2- 1 087 359
- EP-A2- 1 187 082
- EP-A2- 1 437 573
- JP-A- H09 236 439
- JP-A- 2003 156 345
- JP-A- 2004 234 649
- JP-A- 2006 079 483
- JP-A- 2006 220 523
- JP-A- 2010 181 160
- US-A- 5 831 552
- US-A1- 2004 150 534
- US-A1- 2006 220 924
- US-A1- 2007 225 902
- US-A1- 2010 010 730

## Description

### TECHNICAL FIELD

The present invention relates to a traffic information guide system, a traffic information guide device, a traffic information guide method, and a computer program that are used for providing traffic information.

### BACKGROUND ART

In various information terminals according to the related art, such as vehicle navigation devices, cellular phones, smartphones, tablet terminals, and personal computers, (hereinafter referred to as navigation devices or the like), map information including information on road networks and facilities is obtained by storing the map information in various storage devices or downloading the map information from, for example, a server so that the map information is provided to users. In the navigation devices or the like, a current position of a user is specified by using a positioning system for determining a current position, such as a GPS, so that guidance is offered on a map and a route to a destination set by the user is displayed for guidance.

In the navigation devices or the like according to the related art, a map image and the current position of the user are displayed and, in addition, traffic information, such as road traffic congestion conditions and an accident occurring on a road, displayed in order to enhance convenience of the user is provided. Various methods can be used for providing traffic information. For example, Japanese Patent Application Publication No. 2000-99883 (JP 2000-099883 A) discloses a technique of displaying a symbol mark (e.g., an arrow mark for traffic congestion) indicating traffic information on a map image and, when a user selects the displayed symbol mark, details of traffic information associated with the selected symbol mark are presented by text for guidance. Japanese Patent Application Publication No. 2012-154882 (JP 2012-154882 A) discloses a technique of displaying, on a map image, an icon image indicating a traffic event (e.g., traffic congestion, an accident, road closed, construction, or lane regulation) and an arrow image specifying a section where the traffic event occurs in order to present traffic information for guidance.

### [Related-art Documents]

### [Patent Documents]

[Patent Document 1] Japanese Patent Application Publication No. 2000-99883 (JP 2000-099883 A) (pages 4 to 5 and FIG. 7)
[Patent Document 2] Japanese Patent Application Publication No. 2012-154882 (JP 2012-154882 A) (page 9 and FIG. 9)

Furthermore, the documents JP H09 236439 A, EP 1 087 359 A2 and US 2007/225902 A1 show traffic information guide systems according to the preamble of claim 1.

### SUMMARY OF THE INVENTION

### [Problem to be Solved by the Invention]

In the technique of Patent Document 1, however, since details of traffic information are displayed in text, it is difficult for a user to find a relationship between the displayed details and the map image, and it takes time for the user to recognize the type of a current traffic event and a section where the traffic event occurs on the map image. In particular, if the user is driving a vehicle, the user needs to recognize the details of traffic information promptly and easily.

In the technique of Patent Document 2, on the other hand, the icon image and the arrow image are displayed for each traffic information item. Thus, in a case where a plurality of traffic information items are concentrated around the same location (e.g., a case where an accident and traffic congestion occur in a section where construction is performed), displayed icon images and arrow images overlap each other so that the traffic information cannot be precisely provided to the user.

The present invention has been made to solve problems in the related art, and provides a traffic information guide system, a traffic information guide device, a traffic information guide method, and a computer program that enable easily understandable precise traffic information to be provided to a user even in a case where a plurality of traffic information items are concentrated around the same location.

### [Means for Solving the Problem]

To achieve the object described above, a traffic information guide system (1), a traffic information guide device (1), a traffic information guide method, and a computer program according to the present invention are a system and a device each of which provides traffic information specifying the type of a traffic event and a section where the traffic event occurs, a traffic information providing method for providing traffic information by using the system or device, and a computer program for causing the device to implement the following functions. Specifically, the device and the system includes: traffic information obtaining means (41) for obtaining traffic information items each including an information item specifying a type of a traffic event and a section where the traffic event occurs; map image display means (41) for displaying a map image on a display device (15); icon display means (41) for displaying, based on each of the traffic information items obtained by the traffic information obtaining means, an icon (54, 56, 60) indicating the type of the traffic event specified by the traffic information item in the section specified by the traffic information item on the map image; and section specifying image display means (41) for displaying, on the map image, a section specifying image (55, 57, 61) connecting a start point to an end point of the section specified by the traffic information item in a case where a user's operation of selecting the icon is received. A priority degree is set depending on the type of the traffic event. In a case where the traffic information items obtained by the traffic information obtaining means are of a plurality of types and sections specified by the traffic information items at least partially overlap each other, the section specifying image one of the traffic information item with highest priority is displayed on the map image, irrespective of whether the user's operation of selecting the icon is received or not, and the section specifying image of each of the other traffic information items is displayed on the map image by the section specifying image display means in a case where the user's operation of selecting the is received.

### [Effects of the Invention]

With the traffic information guide system, the traffic information guide device, the traffic information guide method, and the computer program according to the present invention having the foregoing configuration, the icon indicating the type of the traffic event and the section specifying image connecting the start point to the end point of the section where the traffic event occurs are displayed on the map image, thereby enabling the user to easily and promptly recognize traffic information. In addition, the section specifying image is displayed when an associated icon is selected by the user. Thus, even in a case where a plurality of traffic information items are concentrated around the same location, overlapping of images concerning the traffic information items can be reduced, thereby enabling a necessary traffic information item to be presented for guidance in an easily understandable manner. Furthermore, the section specifying image can be displayed when necessary for the user, and thus, more precise traffic information can be provided to the user.

### BRIEF DESCRIPTION OF THE DRAWINGS

[FIG. 1] FIG. 1 is a block diagram illustrating a navigation device according to an embodiment.
[FIG. 2] FIG. 2 shows an example of traffic information.
[FIG. 3] FIG. 3 is a flowchart of a traffic congestion degree determination process program according to the embodiment.
[FIG. 4] FIG. 4 illustrates a guide screen of the navigation device in a case where sections specified by traffic information items do not overlap each other.
[FIG. 5] FIG. 5 shows priority degrees of traffic information items.
[FIG. 6] FIG. 6 shows a display state of traffic information in a case where a section specified by a traffic information item on lane regulation overlaps a section specified by a traffic information item on construction.
[FIG. 7] FIG. 7 shows a display state of traffic information in a case where the section specified by the traffic information item on lane regulation partially overlaps the section specified by the traffic information item on construction.
[FIG. 8] FIG. 8 illustrates the guide screen of the navigation device in a case where sections specified by traffic information items overlap each other.
[FIG. 9] FIG. 9 illustrates a display state of traffic information in a case where the section specified by the traffic information item on lane regulation overlaps the section specified by the traffic information item on construction and an icon is selectively operated.
[FIG. 10] FIG. 10 illustrates a display state of traffic information in a case where the section specified by the traffic information item on lane regulation partially overlaps the section specified by the traffic information item on construction and an icon is selectively operated.

### MODES FOR CARRYING OUT THE INVENTION

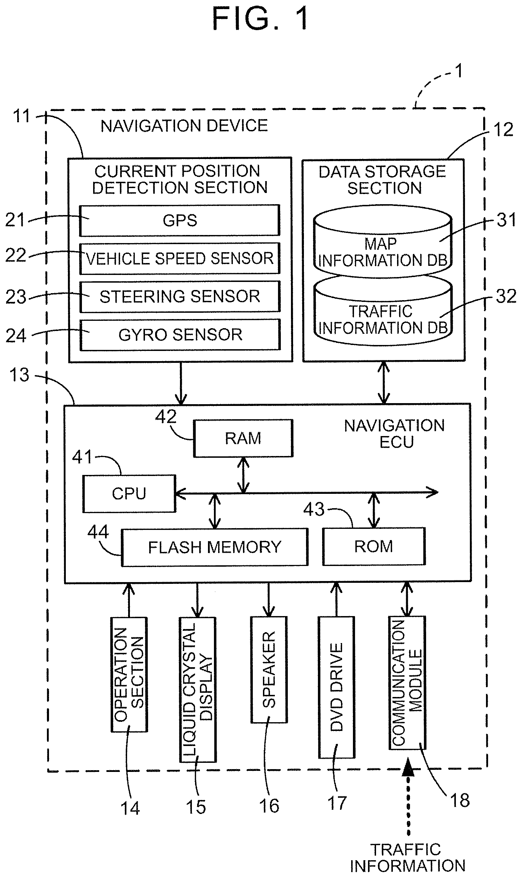

A traffic information guide system and a traffic information guide device, embodied as a navigation device 1, according to an embodiment of the present invention will be described in detail below with reference to the drawings. First, a schematic configuration of the navigation device 1 according to the embodiment will be described with reference to FIG. 1. FIG. 1 is a block diagram illustrating the navigation device 1 according to the embodiment.

As illustrated in FIG. 1, the navigation device 1 according to the embodiment includes: a current position detection section 11 that detects a current position of a vehicle on which the navigation device 1 is mounted; a data storage section 12 that stores various types of data; a navigation ECU 13 that performs various computation processes on the basis of input information; an operation section 14 that receives an operation from a user; a liquid crystal display 15 that displays a map around the vehicle and facility information to the user; a speaker 16 that outputs audio route guidance; a DVD drive 17 that reads a DVD serving as a storage medium; and a communication module 18 that communicates with an information center such as a probe center and a vehicle information and communication system (VICS, registered trademark) center.

The constituent elements of the navigation device 1 will be described below in order.

The current position detection section 11 includes a GPS 21, a vehicle speed sensor 22, a steering sensor 23, a gyro sensor 24, and so forth, and can detect the current position of the vehicle, the orientation, and the travel speed of the vehicle, the current time, and so forth. In particular, the vehicle speed sensor 22 is a sensor for detecting the travel distance of the vehicle and the vehicle speed, and generates pulses in accordance with rotation of the drive wheels of the vehicle to output a pulse signal to the navigation ECU 13. The navigation ECU 13 counts the generated pulses to calculate the rotation speed of the drive wheels and the travel distance. It is not necessary that the navigation device 1 should include all of the four sensors, and the navigation device 1 may be configured to include only one or some of such sensors.

The data storage section 12 includes a hard disk (not shown) that serves as an external storage device and a storage medium, and a recording head (not shown) serving as a driver that reads a map information DB 31, a traffic information DB 32, a predetermined program, for example, stored in the hard disk and writes predetermined data on the hard disk. The data storage section 12 may be constituted by a memory card or an optical disk such as a CD and a DVD, instead of the hard disk. The map information DB 31 may be stored in an external server so that the navigation device 1 can obtain the map information DB 31 through communication.

The map information DB 31 is a storage means that stores link data on a road (link), node data on a node, location data on a location of, for example, a facility, intersection data on an intersection, map display data for displaying a map, exploration data for exploring a route, search data for searching for a location, and so on.

The traffic information DB 32 is a DB that stores traffic information received from an external traffic information center such as a VICS center. The traffic information is not limited to VICS information, and may be a transport protocol expert group (TPEG) or probe information, instead of VICS information.

For example, the traffic information center is an information providing center that collects a detection result on a vehicle travelling on a road detected by using a sensor disposed on the road and information provided by, for example, a specific agency (e.g., the National Police Agency), generates traffic information based on the detection result and the provided information, and provides the generated traffic information to the navigation device 1 through an FM multiplex broadcasting, an optical beacon, a radio beacon, and so forth. Examples of the provided traffic information include "traffic regulation information such as road closed, lane regulation, and chain regulation" and "traffic trouble information such as disabled vehicle, accident, and construction" in addition to "traffic congestion information specifying a section where traffic congestion occurs and the degree of the traffic congestion." To generate traffic information on traffic congestion, for example, the traffic information center obtains an average vehicle speed of the vehicle by using a sensor disposed on a road, and determines the degree of traffic congestion on the basis of determination conditions defined for each type of the roads. The traffic information center transmits latest traffic information to the navigation device 1 every predetermined time (e.g., every five minutes).

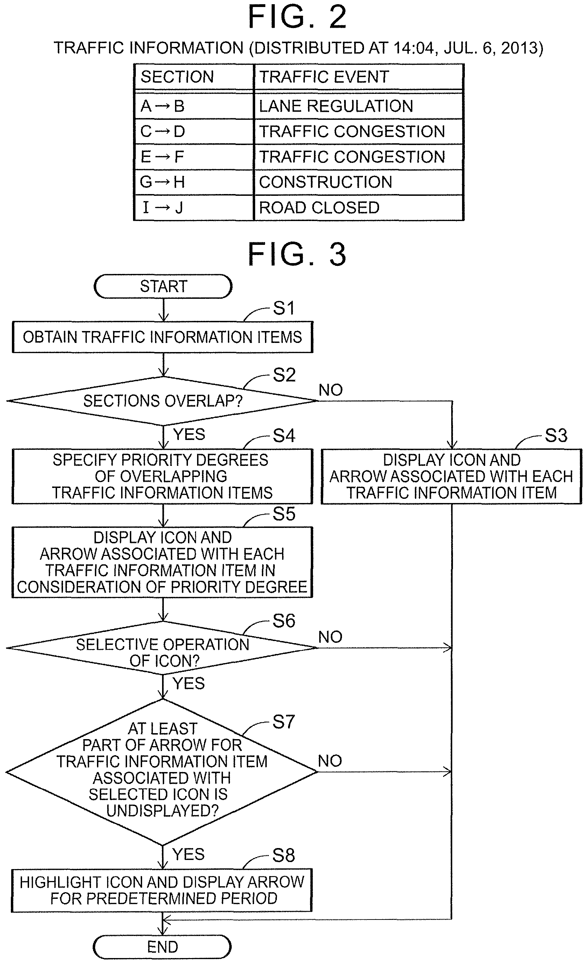

FIG. 2 shows an example of traffic information distributed from the traffic information center to the navigation device 1. The traffic information shown in FIG. 2 is information generated in five minutes from 13:56 to 14:01 on July 6, 2013, is distributed at 14:01, and includes information specifying the type of traffic event and a section where the traffic event occurs. Examples of the traffic event include traffic congestion, road closed, lane regulation, chain regulation, disabled vehicle, accident, and construction. For example, the traffic information shown in FIG. 2 indicates that lane regulation occurs in a section from location A to location B and traffic congestion occurs in a section from location C to location D. In the example shown in FIG. 2, the section where the traffic event occurs is specified by using a start point and an end point of the section, but may be specified by using a link. The section may also be specified by using the start point and the length of the section.

On the basis of the traffic information stored in the traffic information DB 32, the navigation ECU 13 provides traffic information to a user through the liquid crystal display 15 and the speaker 16 as discussed later.

On the other hand, the navigation ECU (electronic control unit) 13 is an electronic control unit that controls the entire navigation device 1, and includes: a CPU 41 that serves as a computation device and a control device; and internal storage devices such as a RAM 42 that is used as a working memory when the CPU 41 performs various computation processes and that stores route data when a route is found, a ROM 43 that stores, for example, a control program and a traffic information guide process program (see FIG. 3) described later, and a flash memory 44 that stores a program read from the ROM 43. The navigation ECU 13 constitutes various means as a processing algorithm. For example, traffic information obtaining means obtains traffic information items each including an information item specifying the type of a traffic event and a section where the traffic event occurs. Map image display means displays a map image on the liquid crystal display 15. Icon display means displays, based on each of the obtained traffic information items, an icon indicating the type of the traffic event specified by the traffic information item in the section specified by the traffic information item on the map image. Section specifying image connecting means displays a section specifying image on the map image such that the section specifying image connects a start point to an end point of the section specified by the traffic information item when an operation in which the user selects the icon is received.

The operation section 14 is operated to input a departure location at which travel is started and a destination location at which the travel is ended, and includes a plurality of operation switches (not shown) such as various keys and buttons. The navigation ECU 13 performs control so as to execute various operations on the basis of a switch signal output in response to a depression of a switch or the like. The operation section 14 may be composed of a touch panel provided on the front surface of the liquid crystal display 15. The operation section 14 may also be composed of a microphone and an audio recognition unit. In particular, in the embodiment, the operation section 14 is used for selecting an icon indicating a traffic information item displayed on the map image.

The liquid crystal display 15 displays a map image including a road, traffic information, operational guidance, an operation menu, key guidance, an expected travel route from a departure location to a destination location, guidance information on a travel along the expected travel route, news, weather forecasts, the time, mails, television programs, and so forth. The liquid crystal display 15 may be replaced by an HUD or an HMD. In particular, in the embodiment, to display a traffic information item, an icon indicating the type of a traffic event is displayed in a section specified by the traffic information item on a map image. A section specifying image (e.g., an arrow image) connecting a start point to an end point of the section specified by the traffic information item (i.e., the section where the traffic event occurs) is displayed on the map image.

The speaker 16 outputs an audio guidance for guiding travel along an expected travel route and guidance of traffic information on the basis of an instruction from the navigation ECU 13.

The DVD drive 17 is a drive that can read data stored in a storage medium such as a DVD and a CD. Based on the data that has been read out, music and video is played back, the map information DB 31 is updated, and so on.

The communication module 18 is a communication device that receives traffic information transmitted from the traffic information center described above, such as a VICS center and a probe center, and may be a cellular phone or a DCM, for example.

Next, a traffic information guide process program executed in the navigation device 1 having the configuration described above will be described with reference to FIG. 3. FIG. 3 is a flowchart of a traffic information guide process program according to the embodiment. The traffic information guide process program is executed after an ACC (accessory power supply) of the vehicle is turned on, and displays traffic information obtained from the traffic information center for guidance. The program shown in the flowchart of FIG. 3 is stored in the RAM 42 or the ROM 43 included in the navigation device 1 and executed by the CPU 41.

In the traffic information guide process program, in step (hereinafter simply referred to as S) 1, the CPU 41 obtains traffic information items transmitted from an external traffic information center such as a VICS center. As described above, the traffic information items include an information item specifying the type of a traffic event (e.g., traffic congestion, road closed, lane regulation, chain regulation, disabled vehicle, accident, or construction) and an information item specifying a section where the traffic event occurs (see FIG. 2). The traffic information center transmits a latest traffic information item to the navigation device 1 every predetermined time, (e.g., every five minutes). The traffic information items obtained in S1 are stored in the traffic information DB 32.

Next, in S2, the CPU 41 compares sections specified by the traffic information items (i.e., sections where traffic events occur) obtained in S1, and determines whether or not a plurality of types of traffic information items are obtained in S1 and whether or not sections specified by the traffic information items at least partially overlap each other. Whether the sections overlap each other or not is determined by comparison among different types of traffic information items. The types of the traffic information items correspond to the types of traffic events. Specifically, traffic information items on the same traffic event are defined as traffic information items of the same type. That is, even when there are a plurality of types of traffic information items on the same traffic event (e.g., traffic congestion), the sections do not overlap basically. Thus, in S2, it is determined whether or not the sections overlap each other among traffic information items on different traffic events (e.g., traffic congestion and construction). If traffic information items of only one type are obtained in S1, the sections specified by the traffic information items do not overlap each other, and the process proceeds to S3.

If it is determined that the traffic information items obtained in S1 are of a plurality of types and the sections specified by the traffic information items at least partially overlap each other (YES in S2), the process proceeds to S4. On the other hand, if it is determined that the traffic information items obtained in S1 are of only one type, or if it is determined that the specified sections do not overlap each other (NO in S2) even if the obtained traffic information items are of a plurality of types, the process proceeds to S3.

In S3, the CPU 41 displays a map image and the traffic information items obtained in S1 on the liquid crystal display 15. The map image to be displayed may be a map image around the current position of the vehicle or a map image of any area specified by a user. To display traffic information, the CPU 41 first determines an icon and an arrow (section specifying images) indicating a traffic information item to be displayed, by using a table (not shown) in which traffic events are associated with depicting data (icons or arrows). Next, depicting data corresponding to the selected icon and arrow is read out from the memory and depicted at a corresponding location on the map image by superimposing the icon and the arrow on each other. Specifically, an arrow is depicted from a start point to an end point of a section specified by the traffic information item and an icon is depicted on the start point of the section. The color of the arrow is preferably changed for each type of traffic events. The color of the icon is preferably the same as that of the corresponding arrow. In this manner, the user can easily understand the correspondence of the displayed icon with the arrow.

With regard to traffic information, traffic information items included in the map image displayed on the liquid crystal display 15 are basically to be displayed. The traffic information items to be displayed are preferably changed in accordance with the scale of the map image to be displayed. For example, on a scale (e.g., 1/100,000) for displaying a larger area, only traffic information items on main roads such as expressways and national roads are displayed, whereas on a scale (e.g., 1/10,000), for displaying a narrower area, traffic information items on other general roads as well as the traffic information items on main roads such as expressways and national roads are also displayed.

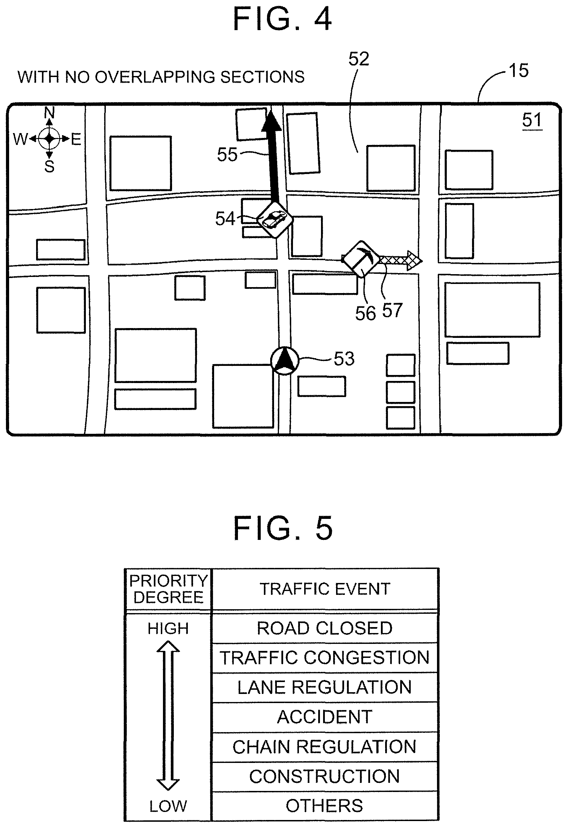

FIG. 4 illustrates a guide screen 51 displayed on the liquid crystal display 15 of the navigation device 1 in S3. In the example illustrated in FIG. 4, a traffic information item on traffic congestion and a traffic information item on construction are individually displayed.

As illustrated in FIG. 4, on the guide screen 51, a host vehicle mark 53 indicating the current position of the hosts vehicle, an icon 54 indicating traffic congestion, an arrow 55 indicating a section where traffic congestion occurs, an icon 56 indicating construction, and an arrow 57 indicating a section where the construction is performed, are displayed in addition to a map image 52 around the vehicle. As a result, the user sees the guide screen 51 and can easily and promptly understand that traffic congestion occurs in the section indicated by the arrow 55 and construction is performed in the section indicated by the arrow 57.

On the other hand, in S4, the CPU 41 specifies the priority degrees of traffic information items for sections that are determined to overlap each other in S2. The priority degrees of the traffic information items are specified on the basis of the types of the traffic events. FIG. 5 shows a relationship between the type of traffic event and the priority degree thereof.

As shown in FIG. 5, as the degree of influence of a traffic event on user's travel increases, the priority degree thereof increases. Specifically, the priority is highest for "road closed," and decreases in the order from "traffic congestion," "lane regulation," "accident," "chain regulation," "construction," and "others." The relationship between the types of traffic events and the priority degrees thereof shown in FIG. 5 is previously set in the device, and is stored in, for example, the ROM 43. The relationship between the types of traffic events and the priority degrees thereof shown in FIG. 5 is merely an example, and may be appropriately changed. For example, the highest priority may be assigned to "traffic congestion."

Next, in S5, the CPU 41 displays the traffic information items obtained in S1 together with the map image on the liquid crystal display 15. Traffic information items defining sections that overlap each other are displayed in consideration of the priority degrees thereof specified in S4. Specifically, for a traffic information item with highest priority, an icon is displayed on a start point of a section specified by the traffic information item, and an arrow is displayed to indicate the entire section specified by the traffic information item from the start point to an end point thereof. On the other hand, for each of the other traffic information items, although an icon is displayed, an arrow is not displayed for a part of a section overlapping a section specified by a traffic information item with higher priority and is displayed only for a non-overlapping part of the section.

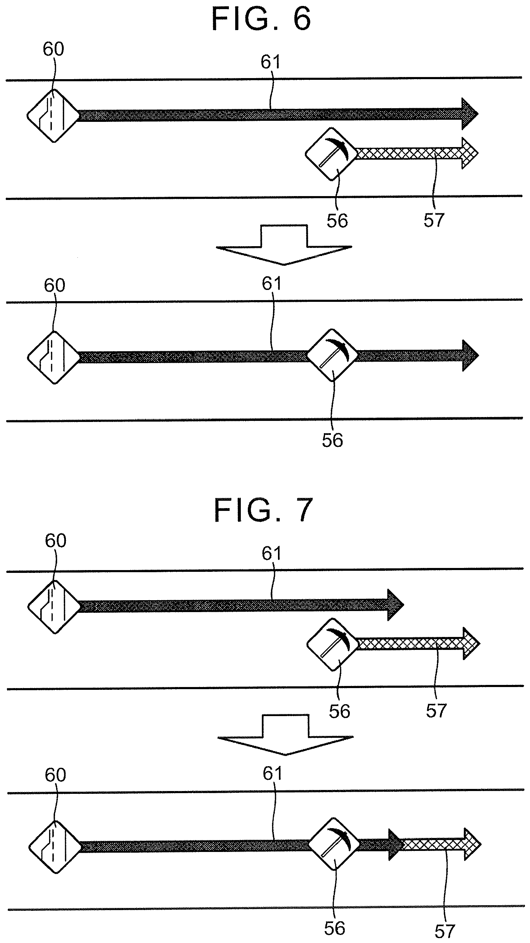

For example, as shown in FIG. 6, in a case where a section specified by a traffic information item on lane regulation and a section specified by a traffic information item on construction overlap each other and the entire section specified by the traffic information item on construction with lower priority is included in the section specified by the traffic information item on lane regulation with higher priority, an icon 60 indicating lane regulation is displayed, and an arrow 61 indicating the section specified by the traffic information item on lane regulation is displayed for the entire section from the start point to the end point thereof. On the other hand, an arrow 57 indicating the section specified by the traffic information item on construction is not displayed, and only an icon 56 indicating construction is displayed.

As shown in FIG. 7, in a case where the section specified by the traffic information item on lane regulation and the section specified by the traffic information item on construction overlap each other and the section specified by the traffic information item on construction with lower priority is partially included in the section specified by the traffic information item on lane regulation with higher priority, the icon 60 indicating lane regulation is displayed, and the arrow 61 indicating the section specified by the traffic information item on lane regulation is displayed for the entire section from the start point to the end point thereof. On the other hand, the arrow 57 indicating the section specified by the traffic information item on construction is not displayed for a part of the section overlapping the section specified by the traffic information item on lane regulation and is displayed only for a non-overlapping part of the section.

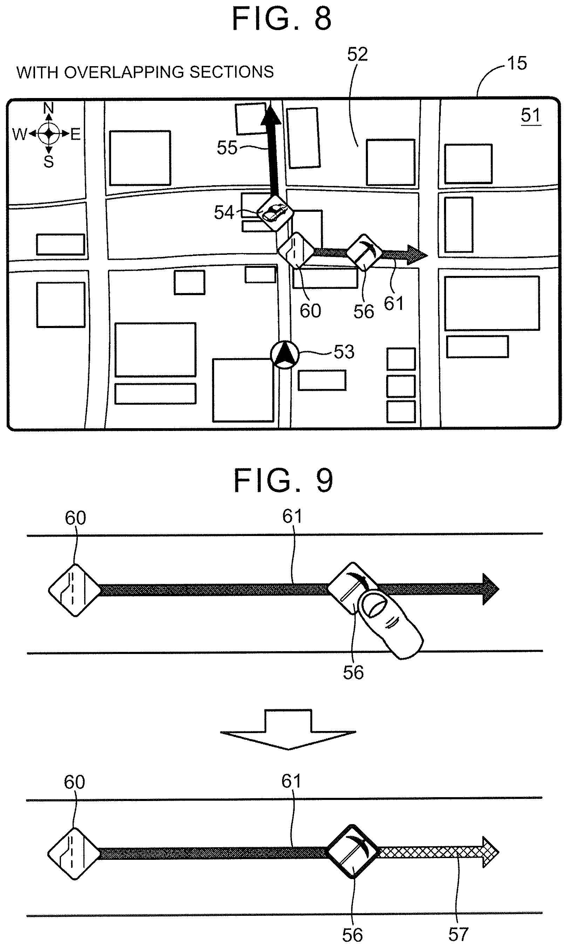

FIG. 8 illustrates the guide screen 51 displayed on the liquid crystal display 15 of the navigation device 1 in S5. In the example illustrated in FIG. 8, as traffic information, a traffic information item on traffic congestion, a traffic information item on lane regulation, and a traffic information item on construction are displayed, and a section specified by the traffic information item on lane regulation and a section specified by the traffic information item on construction overlap each other.

As illustrated in FIG. 8, on the guide screen 51, the host vehicle mark 53 indicating the current position of the host vehicle, the icon 54 indicating traffic congestion, and the arrow 55 indicating a section where traffic congestion occurs, are displayed in addition to the map image 52 around the vehicle. For the traffic information item on lane regulation with higher priority of the traffic information items specifying the overlapping sections, the icon 60 indicating lane regulation and the arrow 61 indicating a section where lane regulation occurs are displayed. On the other hand, for the traffic information item on construction with lower priority, the entire section is included in the section specified by the traffic information item on lane regulation with higher priority, and thus, the icon 56 indicating construction is displayed, but an arrow indicating the section where construction occurs is not displayed. As a result, the user sees the guide screen 51 and can easily and promptly understand that traffic congestion occurs in the section indicated by the arrow 55 and lane regulation is provided in the section indicated by the arrow 61. Although the user does not know details of the section where construction occurs, the user can specify the start location of the section where construction occurs based on the location of the icon and understand that there is a construction section in at least the section where lane regulation is provided. Since the arrows do not overlap each other in display, the user can clearly recognize a traffic information item that is important for the user.

Thereafter, in S6, on the basis of an operation signal transmitted from the operation section 14, the CPU 41 determines whether a user's operation of selecting one of the icons displayed on the map image in S5 is received or not. For example, in a case where the operation section 14 is a touch panel, if touch coordinates transmitted from the touch panel coincide with a display region of the icon, it is determined that the user's operation of selecting the icon is received.

If it is determined that the user's operation of selecting one of the icons displayed on the map image in S5 is received (YES in S6), the process proceeds to S7. On the other hand, if it is determined that that user's operation of selecting one of the icons displayed on the map image in S5 is not received (NO in S6), the traffic information guide process program is finished.

In S7, the CPU 41 determines whether or not the icon selected by the user is an icon associated with the traffic information item for which at least a part of the arrow is undisplayed (i.e., the traffic information item with lower priority specifying the section having the overlapping part).

If it is determined that the icon selected by the user is an icon associated with the traffic information item for which at least a part of the arrow is undisplayed (YES in S7), the process proceeds to S8. On the other hand, if it is determined that the icon selected by the user is not an icon associated with the traffic information item for which at least a part of the arrow is undisplayed (NO in S7), the traffic information guide process program is finished.

In S8, the CPU 41 highlights the icon selected by the user and also displays an arrow associated with a traffic information item indicated by the selected icon for the entire section from the start point to the end point thereof. After a lapse of a predetermined time (e.g., 5 sec.) from the selection, the highlighting of the icon is canceled, and the display state of the arrow is returned to the state before the selection. The icon is highlighted by, for example, widening the frame of the icon or changing the color of the icon. As a result, the traffic information item for which an arrow is not displayed can also be precisely provided to the user when necessary, and after the user has recognized the traffic information item, the arrow becomes non-displayed again. Thus, overlapping of images for traffic information items can be minimized.

A period in which the highlighting of the icon and the display of the entire section by the arrow can be appropriately set. For example, in a state in which selection of an icon continues (a state in which an icon is touched in the case of a touch panel), it may be configured in such a manner that the highlighting of the icon and the display of the entire section by the arrow continue and the highlighting of the icon is canceled when the selection is canceled (e.g., when the icon becomes in an untouched state), and the display state of the arrow is returned to the state before the selection.

For example, FIG. 9 illustrates a case where the section specified by the traffic information item on lane regulation overlaps the section specified by the traffic information item on construction and the entire section specified by the traffic information item on construction with lower priority is included in the section specified by the traffic information item on lane regulation with higher priority, and a case where the icon 56 indicating construction is selected. As illustrated in FIG. 9, when the icon 56 indicating construction is selected, the icon 56 indicating construction is highlighted. The non-displayed arrow 57 indicating the section specified by the traffic information item on construction is displayed for the entire section from the start point to the end point thereof. As a result, the user can recognize details of the section where construction is performed.

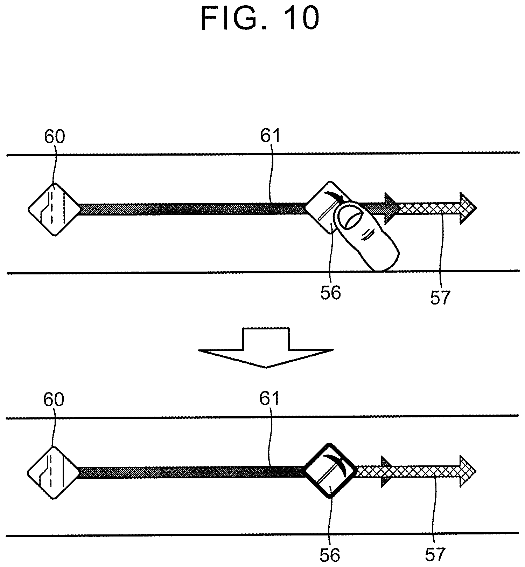

FIG. 10 illustrates a case where the section specified by the traffic information item on lane regulation overlaps the section specified by the traffic information item on construction, the section specified by the traffic information item on construction with lower priority is only partially included in the section specified by the traffic information item on lane regulation with higher priority, and a case where the icon 56 indicating construction is selected. As shown in FIG. 10, when the icon 56 indicating construction is selected, the icon 56 indicating construction is highlighted. The arrow 57 indicating the partially displayed section specified by the traffic information item on construction is displayed for the entire section from the start point to the end point thereof. As a result, the user can recognize details of the section where construction is performed. In the example illustrated in FIG. 10, part of the arrow 61 is also displayed in the overlapping part of the sections indicated by the arrow 61 and the arrow 57. Alternativley, only the arrow 57 may be displayed.

As described above in detail, in the navigation device 1 according to the embodiment, the traffic information guide method by using the navigation device 1, and the computer program executed by the navigation device 1, in a case where traffic information obtained from the traffic information centers is displayed for guidance, an icon indicating the type of a traffic event specified by an obtained traffic information item is displayed in a section specified by the traffic information item on a map image (S3 and S5). When a user's operation of selecting the displayed icon is received, an arrow connecting a start point to an end point of the section specified by the traffic information item is displayed on the map image (S8). Thus, the user can easily and promptly recognize the traffic information item by displaying the icon indicating the type of the traffic event and the arrow connecting the start point to the end point of a section where the traffic event occurs on the map image. Since the arrow is displayed when the associated icon is selected by the user, even when a plurality of traffic information items are concentrated around the same location, overlapping of images for the traffic information items can be reduced, thereby enabling easy guidance of traffic information. In addition, since an arrow can be displayed in a situation where display of the arrow is requested by the user, precise traffic information can be provided to the user.

It should be understood that the present invention is not limited to the embodiment described above.

For example, in the embodiment, an image of an arrow is displayed as a section specifying image connecting a start point to an end point of a section specified by a traffic information item, but the section specifying image may be an image other than an arrow. For example, the image may be a line connecting the start point to the end point of the section.

In the embodiment, an icon indicating a traffic event of a traffic information item is displayed at a start point of a section specified by the traffic information item. Alternatively, the icon may be displayed at any location within the section specified by the traffic information item. For example, the icon may be displayed at a midpoint of the section.

In the embodiment, in a case where only a part of a section specified by a traffic information item with lower priority is included in a section specified by a traffic information item with higher priority, an arrow indicating the section specified by the traffic information item with lower priority is not displayed for a part of the section overlapping the section specified by the traffic information item with higher priority and is displayed only for an non-overlapping part of the section. Alternativley, the arrow may not be displayed for the non-overlapping part of the section, either.

The present invention is applicable to various devices having a function of displaying a map image and traffic information, as well as the navigation device. For example, the present invention is applicable to cellular phones, smartphones, tablet terminals, and personal computers (hereinafter referred to as portable terminals or the like). The present invention is also applicable to a system constituted by a server and a portable terminal or the like. In this case, the steps in the traffic information guide process program (FIG. 3) described above may be executed by the server or the portable terminal or the like.

While a traffic information guide system according to a specific embodiment of the present invention has been described above, the traffic information guide system may be configured as described below, and the following effect can be achieved in such cases.

For example, a first configuration is as follows.

In a case where the priority degree is set depending on the type of traffic event, a plurality of types of traffic information items are obtained by the traffic information obtaining means, and sections specified by traffic information items at least partially overlap each other, a section specifying image for a traffic information item with the highest priority is displayed on a map image, irrespective of whether a user's operation of selecting an associated icon is received or not, whereas a section specifying image for each of the other traffic information items is displayed on the map image by the section specifying image display means when a user's operation of selecting an associated icon is received.

The "types of traffic information items" correspond to the types of traffic events specified by the traffic information items. Specifically, traffic information items on the same traffic event are defined as traffic information items of the same type.

In the traffic information guide system having the configuration described above, a traffic information item with high priority that is important for the user can be precisely displayed for guidance by using the section specifying image, and the other traffic information items can be precisely provided to the user when requested by the user. In a situation where no section specifying image is displayed, an icon is displayed irrespective of the user's operation, and thus, the user can recognize at least an approximate location where a traffic event occurs.

A second configuration is as follows.

In a case where a plurality of types of traffic information items are obtained by the traffic information obtaining means and a section specified by a traffic information item with higher priority includes an entire section specified by another traffic information item with lower priority, a section specifying image for the traffic information item with lower priority is not displayed in the entire section specified by the traffic information item with lower priority before the user's operation of selecting an associated icon is received.

In the traffic information guide system having the configuration described above, in a case where a traffic information item with higher priority completely covers another traffic information item with lower priority, a section specifying image of the traffic information item with lower priority is normally non-displayed, thereby enabling a traffic information item with higher priority that is important to the user to be precisely displayed for guidance. On the other hand, a section specifying image of the traffic information item with lower priority is displayed when requested by the user, thereby enabling precise traffic information to be displayed for guidance when necessary.

A third configuration is as follows.

In a case where a plurality of types of traffic information items are obtained by the traffic information obtaining means and a section specified by a traffic information item with higher priority includes a part of a section specified by another traffic information item with lower priority, a section specifying image of a part of the section specified by the traffic information item with lower priority that does not overlap the section specified by the traffic information item with higher priority is displayed before a user's operation of selecting an associated icon is received.

In the traffic information guide system having the configuration described above, in a case where a traffic information item with higher priority covers a part of a traffic information item with lower priority, a section specifying image of the traffic information item with lower priority is not displayed in an overlapping part of the section, thereby enabling a traffic information item with high priority that is important to the user to be precisely displayed for guidance. On the other hand, a section specifying image of a non-displayed section specified by the traffic information item with lower priority is displayed when requested by the user, thereby enabling precise traffic information to be displayed for guidance when necessary. In addition, the section specifying image of the part of the section specified by the traffic information item with lower priority and not overlapping the section specified by the traffic information item with higher priority is normally displayed, thereby enabling precise traffic information to be provided as long as guidance of a traffic information item with higher priority is not hindered.

A fourth configuration is as follows.

As the degree of influence of a traffic event on user's travel increases, the priority degree thereof increases.

In the traffic information guide system having the configuration described above, a section specifying image of a traffic information item for which guidance to the user is expected to be more important is preferentially displayed, thereby enabling a necessary traffic information item to be provided to the user with a minimum operation by the user.

A fifth configuration is as follows.

In a case where a user's operation of selecting an icon is received, the section specifying image display means displays a section specifying image in a period from the reception for a lapse of a predetermined time.

In the traffic information guide system having the configuration described above, a traffic information item for which a section specifying image is usually non-displayed can be precisely provided to the user when necessary, whereas the section specifying image becomes non-displayed again after the user has recognized the traffic information item. Thus, overlapping of images on traffic information items can be minimized.

### Description of the Reference Numerals

- 1: NAVIGATION APPARATUS
- 15: LIQUID CRYSTAL DISPLAY
- 41: CPU
- 42: RAM
- 43: ROM
- 51: GUIDE SCREEN
- 54, 56, 60: ICON
- 55, 57, 61: ARROW

## Claims

1. A traffic information guide system (1), comprising:
traffic information obtaining means (41) configured for obtaining traffic information items each including an information item specifying a type of a traffic event and a section where the traffic event occurs;
map image display means (41) configured for displaying a map image on a display device (15);
icon display means (41) configured for displaying, based on each of the traffic information items obtained by the traffic information obtaining means, an icon (54, 56, 60) indicating the type of the traffic event specified by the traffic information item in the section specified by the traffic information item on the map image; and
section specifying image display means (41) configured for displaying, on the map image, a section specifying image (55, 57, 61) connecting a start point to an end point of the section specified by the traffic information item in a case where a user's operation of selecting the icon is received, **characterized in that** the system is configured such that a priority degree is set depending on the type of the traffic event,
in a case where the traffic information items obtained by the traffic information obtaining means (41) are of a plurality of types and sections specified by the traffic information items at least partially overlap each other,
the section specifying image (55, 57, 61) of the traffic information item with highest priority is displayed on the map image, irrespective of whether the user's operation of selecting the icon (54, 56, 60) is received or not, and
the section specifying image (55, 57, 61) of each of the other traffic information items is displayed on the map image by the section specifying image display means (41) in a case where the user's operation of selecting the icon (54, 56, 60) is received.

2. The traffic information guide system (1) according to claim 1, **characterized in that** the system is configured such that in a case where the traffic information items obtained by the traffic information obtaining means (41) are of a plurality of types and a section specified by a traffic information item with higher priority includes an entire section specified by a traffic information item with lower priority, and
the section specifying image (55, 57, 61) of the traffic information item with lower priority is not displayed in the entire section specified by the traffic information item with lower priority, before the user's operation of selecting the icon (54, 56, 60) is received.

3. The traffic information guide system (1) according to claim 1, **characterized in that** the system is configured such that in a case where the traffic information items obtained by the traffic information obtaining means (41) are of a plurality of types and a section specified by a traffic information item with higher priority includes a part of a section specified by a traffic information item with lower priority, and
the section specifying image (55, 57, 61) of the traffic information item with lower priority is displayed only for a part of the section that is specified by the traffic information item with lower priority, the part not overlapping the section specified by the traffic information item with higher priority, before the user's operation of selecting the icon (54, 56, 60) is received.

4. The traffic information guide system (1) according to any one of claims 1 to 3, **characterized in that** the system is configured such that as a degree of influence of a traffic event of a traffic information item on user's travel increases, the priority degree increases.

5. The traffic information guide system (1) according to any one of claims 1 to 4, **characterized in that** the system is configured such that in a case where the user's operation of selecting the icon (54, 56, 60) is received, the section specifying image display means (41) displays the section specifying image (55, 57, 61) in a period from the reception of the operation for a lapse of a predetermined time.

6. A traffic information guide method **characterized by** comprising the steps of:
causing traffic information obtaining means (41) to obtain traffic information items each including an information item specifying a type of a traffic event and a section where the traffic event occurs;
causing map image display means (41) to display a map image on a display device (15);
causing icon display means (41) to display, based on each of the traffic information items obtained by the traffic information obtaining means (41), an icon (54, 56, 60) indicating the type of the traffic event specified by the traffic information item in the section specified by the traffic information item on the map image; and
causing section specifying image display means to display, on the map image, a section specifying image (55, 57, 61) connecting a start point to an end point of the section specified by the traffic information item in a case where a user's operation of selecting the icon is received,
**characterized in that**
a priority degree is set depending on the type of the traffic event,
in a case where the obtained traffic information items are of a plurality of types and sections specified by the traffic information items at least partially overlap each other,
the section specifying image (55, 57, 61) of the traffic information item with highest priority is displayed on the map image, irrespective of whether the user's operation of selecting the icon (54, 56, 60) is received or not, and
the section specifying image (55, 57, 61) of each of the other traffic information items is displayed on the map image by the section specifying image display means (41) in a case where the user's operation of selecting the icon (54, 56, 60) is received.

7. A computer program product including a program for a processing device, comprising software code portions for performing the steps according to claim 6 when the program is run on the processing device.

## Patentansprüche

1. Verkehrsinformationenführungssystem (**1**), mit:
einer Verkehrsinformationenerlangungseinrichtung (**41**), die zum Erlangen von Verkehrsinformationselementen, die jeweils ein Informationselement enthalten, das einen Typ eines Verkehrsereignisses und eine Sektion, in dem das Verkehrsereignis auftritt, spezifiziert, konfiguriert ist;
einer Kartenbildanzeigeeinrichtung (**41**), die zum Anzeigen eines Kartenbildes auf einer Anzeigevorrichtung (**15**) konfiguriert ist;
einer Symbolanzeigeeinrichtung (**41**), die zum Anzeigen, basierend auf jedem der durch die Verkehrsinformationenerlangungseinrichtung erhaltenen Verkehrsinformationselemente, eines Symbols (**54, 56, 60**), das den Typ des durch das Verkehrsinformationselement spezifizierten Verkehrsereignis in der durch das Verkehrsinformationselement spezifizierten Sektion angibt, auf dem Kartenbild konfiguriert ist; und
einer Sektionsspezifizierungsbildanzeigeeinrichtung (**41**), die zum Anzeigen eines Sektionsspezifizierungsbildes (**55, 57, 61**), das einen Startpunkt mit einem Endpunkt der durch das Verkehrsinformationselement spezifizierten Sektion in einem Fall verbindet, in dem eine Benutzeroperation des Auswählens des Symbols empfangen wird, auf dem Kartenbild konfiguriert ist,
**dadurch gekennzeichnet dass**
ein Prioritätsgrad in Abhängigkeit von dem Typ des Verkehrsereignisses in einem Fall gesetzt wird, in dem die von der Verkehrsinformationenerlangungseinrichtung (**41**) erlangten Verkehrsinformationselemente aus einer Vielzahl von Typen bestehen und sich durch die Verkehrsinformationselemente spezifizierte Abschnitte zumindest teilweise gegenseitig überlappen,
das Sektionsspezifizierungsbild (**55, 57, 61**) des Verkehrsinformationselements mit der höchsten Priorität auf dem Kartenbild angezeigt wird, unabhängig davon, ob die Benutzeroperation des Auswählens des Symbols (**54, 56, 60**) empfangen wird oder nicht, und
das Sektionsspezifizierungsbild (**55, 57, 61**) von jedem der anderen Verkehrsinformationselemente auf dem Kartenbild durch die Sektionsspezifizierungsbildanzeigeeinrichtung (**41**) in einem Fall angezeigt wird, in dem die Benutzeroperation des Auswählens des Symbols (**54, 56, 60**) empfangen wird.

2. Verkehrsinformationenführungssystem (**1**) gemäß Anspruch 1, **dadurch gekennzeichnet, dass**
das System konfiguriert ist, so dass in einem Fall, in dem die von der Verkehrsinformationenerlangungseinrichtung (**41**) erlangten Verkehrsinformationselemente von einer Vielzahl von Typen sind und eine durch ein Verkehrsinformationselement mit höherer Priorität spezifizierte Sektion eine gesamte durch ein Verkehrsinformationselement mit niedrigerer Priorität spezifizierte Sektion umfasst, und
das Sektionsspezifizierungsbild (**55, 57, 61**) des Verkehrsinformationselements mit niedrigerer Priorität nicht in der gesamten durch das Verkehrsinformationselement mit niedrigerer Priorität spezifizierten Sektion angezeigt wird, bevor die Benutzeroperation des Auswählens des Symbols (**54, 56, 60**) empfangen wird.

3. Verkehrsinformationenführungssystem (**1**) gemäß Anspruch 1, **dadurch gekennzeichnet, dass**
das System konfiguriert ist, so dass in einem Fall, in dem die von der Verkehrsinformationenerlangungseinrichtung (**41**) erlangten Verkehrsinformationselemente von einer Vielzahl von Typen sind und eine durch ein Verkehrsinformationselement mit höherer Priorität spezifizierte Sektion einen Teil einer durch ein Verkehrsinformationselement mit niedrigerer Priorität spezifizierte Sektion umfasst, und
das Sektionsspezifizierungsbild (**55, 57, 61**) des Verkehrsinformationselements mit niedrigerer Priorität nur für einen Teil der durch das Verkehrsinformationselement mit niedrigerer Priorität spezifizierten Sektion angezeigt wird, wobei der Teil die durch das Verkehrsinformationselement mit höherer Priorität spezifizierte Sektion nicht überlappt, bevor die Benutzeroperation des Auswählens des Symbols (**54, 56, 60**) empfangen wird.

4. Verkehrsinformationenführungssystem (**1**) gemäß einem der Ansprüche 1 bis 3, **dadurch gekennzeichnet, dass**
das System konfiguriert ist, so dass, wenn ein Grad des Einflusses eines Verkehrsereignisses eines Verkehrsinformationselements während der Fahrt des Benutzers zunimmt, sich der Prioritätsgrad erhöht.

5. Verkehrsinformationenführungssystem (**1**) gemäß einem der Ansprüche 1 bis 4, **dadurch gekennzeichnet, dass**
das System konfiguriert ist, so dass in einem Fall, in dem die Benutzeroperation des Auswählens des Symbols (**54, 56, 60**) empfangen wird, die Sektionsspezifizierungsbildanzeigeeinrichtung (**41**) das Sektionsspezifizierungsbild (**55, 57, 61**) in einer Periode von dem Empfang der Operation bis zum Ablauf einer vorbestimmten Zeit anzeigt.

6. Verkehrsinformationenführungsverfahren, **gekennzeichnet durch** die Schritte:
Bewirken einer Verkehrsinformationenerlangungseinrichtung (**41**), zum Erlangen von Verkehrsinformationselementen, die jeweils ein Informationselement enthalten, das einen Typ eines Verkehrsereignisses und eine Sektion, in dem das Verkehrsereignis auftritt, spezifiziert;
Bewirken einer Kartenbildanzeigeeinrichtung, zum Anzeigen eines Kartenbildes auf einer Anzeigevorrichtung (**15**);
Bewirken einer Symbolanzeigeeinrichtung (**41**), zum Anzeigen, basierend auf jedem der durch die Verkehrsinformationenerlangungseinrichtung erhaltenen Verkehrsinformationselemente, eines Symbols (**54, 56, 60**), das den Typ des durch das Verkehrsinformationselement spezifizierten Verkehrsereignis in der durch das Verkehrsinformationselement spezifizierten Sektion angibt, auf dem Kartenbild; und
Bewirken einer Sektionsspezifizierungsbildanzeigeeinrichtung (**41**), zum Anzeigen eines Sektionsspezifizierungsbildes (**55, 57, 61**), das einen Startpunkt mit einem Endpunkt der durch das Verkehrsinformationselement spezifizierten Sektion in einem Fall verbindet, in dem eine Benutzeroperation des Auswählens des Symbols empfangen wird, auf dem Kartenbild konfiguriert ist,
**dadurch gekennzeichnet dass**
ein Prioritätsgrad in Abhängigkeit von dem Typ des Verkehrsereignisses in einem Fall gesetzt wird, in dem die von der Verkehrsinformationenerlangungseinrichtung (**41**) erlangten Verkehrsinformationselemente aus einer Vielzahl von Typen bestehen und sich durch die Verkehrsinformationselemente spezifizierte Abschnitte zumindest teilweise gegenseitig überlappen,
das Sektionsspezifizierungsbild (**55, 57, 61**) des Verkehrsinformationselements mit der höchsten Priorität auf dem Kartenbild angezeigt wird, unabhängig davon, ob die Benutzeroperation des Auswählens des Symbols (**54, 56, 60**) empfangen wird oder nicht, und
das Sektionsspezifizierungsbild (**55, 57, 61**) von jedem der anderen Verkehrsinformationselemente auf dem Kartenbild durch die Sektionsspezifizierungsbildanzeigeeinrichtung (**41**) in einem Fall angezeigt wird, in dem die Benutzeroperation des Auswählens des Symbols (**54, 56, 60**) empfangen wird.

7. Computerprogrammprodukt umfassend ein Programm für eine Verarbeitungsvorrichtung, mit Softwarecodeabschnitten zum Durchführen der Schritte gemäß Anspruch 6, wenn das Programm auf der Verarbeitungsvorrichtung ausgeführt wird.

## Revendications

1. Système de guidage d'informations de trafic (1), comprenant :
un moyen d'obtention d'informations de trafic (41) configuré de manière à obtenir des éléments d'informations de trafic incluant chacun un élément d'informations spécifiant un type d'événement de trafic et une section où l'événement de trafic se produit ;
un moyen d'affichage d'image de carte (41) configuré de manière à afficher une image de carte sur un dispositif d'affichage (15) ;
un moyen d'affichage d'icône (41) configuré de manière à afficher, sur la base de chacun des éléments d'informations de trafic obtenus par le moyen d'obtention d'informations de trafic, une icône (54, 56, 60) indiquant le type d'événement de trafic spécifié par l'élément d'informations de trafic dans la section spécifiée par l'élément d'informations de trafic sur l'image de carte ; et
un moyen d'affichage d'image de spécification de section (41) configuré de manière à afficher, sur l'image de carte, une image de spécification de section (55, 57, 61) connectant un point de début à un point de fin de la section spécifiée par l'élément d'informations de trafic dans le cas où une opération de sélection, par un utilisateur, de l'icône est reçue,
**caractérisé en ce que :**
le système est configuré de sorte qu'un degré de priorité est défini en fonction du type de l'événement de trafic, dans un cas où les éléments d'informations de trafic obtenus par le moyen d'obtention d'informations de trafic (41) sont d'une pluralité de types, et où des sections spécifiées par les éléments d'informations de trafic se chevauchent mutuellement, au moins partiellement,
l'image de spécification de section (55, 57, 61) de l'élément d'informations de trafic ayant la priorité la plus élevée est affichée sur l'image de carte, indépendamment de la réception ou non de l'opération de sélection, par l'utilisateur, de l'icône (54, 56, 60), et
l'image de spécification de section (55, 57, 61) de chacun des autres éléments d'informations de trafic est affichée sur l'image de carte par le moyen d'affichage d'image de spécification de section (41) dans le cas où l'opération de sélection, par l'utilisateur, de l'icône (54, 56, 60), est reçue.

2. Système de guidage d'informations de trafic (1) selon la revendication 1, **caractérisé en ce que**
le système est configuré de sorte que, dans un cas où les éléments d'informations de trafic obtenus par le moyen d'obtention d'informations de trafic (41) sont d'une pluralité de types, et où une section spécifiée par un élément d'informations de trafic ayant une priorité plus élevée inclut une section entière spécifiée par un élément d'informations de trafic ayant une priorité plus faible, et
l'image de spécification de section (55, 57, 61) de l'élément d'informations de trafic ayant une priorité plus faible n'est pas affichée dans la section entière spécifiée par l'élément d'informations de trafic ayant une priorité plus faible, avant la réception de l'opération de sélection, par l'utilisateur, de l'icône (54, 56, 60).

3. Système de guidage d'informations de trafic (1) selon la revendication 1, **caractérisé en ce que**
le système est configuré de sorte que, dans un cas où les éléments d'informations de trafic obtenus par le moyen d'obtention d'informations de trafic (41) sont d'une pluralité de types, et où une section spécifiée par un élément d'informations de trafic ayant une priorité plus élevée inclut une partie d'une section spécifiée par un élément d'informations de trafic ayant une priorité plus faible, et
l'image de spécification de section (55, 57, 61) de l'élément d'informations de trafic ayant une priorité plus faible n'est affichée que pour une partie de la section qui est spécifiée par l'élément d'informations de trafic ayant une priorité plus faible, la partie ne chevauchant pas la section spécifiée par l'élément d'informations de trafic ayant une priorité plus élevée, avant la réception de l'opération de sélection, par l'utilisateur, de l'icône (54, 56, 60).

4. Système de guidage d'informations de trafic (1) selon l'une quelconque des revendications 1 à 3, **caractérisé en ce que** le système est configuré de sorte que, à mesure qu'augmente un degré d'influence d'un événement de trafic d'un élément d'informations de trafic sur le déplacement de l'utilisateur, le degré de priorité augmente.

5. Système de guidage d'informations de trafic (1) selon l'une quelconque des revendications 1 à 4, **caractérisé en ce que** le système est configuré de sorte que, dans un cas où l'opération de sélection, par l'utilisateur, de l'icône (54, 56, 60), est reçue, le moyen d'affichage d'image de spécification de section (41) affiche l'image de spécification de section (55, 57, 61) au cours d'une période à partir de la réception de l'opération, pendant un laps de temps prédéterminé.

6. Procédé de guidage d'informations de trafic **caractérisé en ce qu'**il comprend les étapes ci-dessous consistant à :
amener le moyen d'obtention d'informations de trafic (41) à obtenir des éléments d'informations de trafic incluant chacun un élément d'informations spécifiant un type d'événement de trafic et une section où l'événement de trafic se produit ;
amener le moyen d'affichage d'image de carte (41) à afficher une image de carte sur un dispositif d'affichage (15) ;
amener le moyen d'affichage d'icône (41) à afficher, sur la base de chacun des éléments d'informations de trafic obtenus par le moyen d'obtention d'informations de trafic (41), une icône (54, 56, 60) indiquant le type de l'événement de trafic spécifié par l'élément d'informations de trafic dans la section spécifiée par l'élément d'informations de trafic sur l'image de carte ; et
amener le moyen d'affichage d'image de spécification de section à afficher, sur l'image de carte, une image de spécification de section (55, 57, 61) connectant un point de début à un point de fin de la section spécifiée par l'élément d'informations de trafic dans un cas où une opération de sélection, par un utilisateur, de l'icône, est reçue ;
**caractérisé en ce que** :
un degré de priorité est défini en fonction du type de l'événement de trafic,
dans un cas où les éléments d'informations de trafic obtenus sont d'une pluralité de types, et où des sections spécifiées par les éléments d'informations de trafic se chevauchent mutuellement, au moins partiellement,
l'image de spécification de section (55, 57, 61) de l'élément d'informations de trafic ayant la priorité la plus élevée est affichée sur l'image de carte, indépendamment de la réception ou non de l'opération de sélection, par l'utilisateur, de l'icône (54, 56, 60), et
l'image de spécification de section (55, 57, 61) de chacun des autres éléments d'informations de trafic est affichée sur l'image de carte par le moyen d'affichage d'image de spécification de section (41) dans un cas où l'opération de sélection, par l'utilisateur, de l'icône (54, 56, 60), est reçue.

7. Produit-programme informatique incluant un programme pour un dispositif de traitement, comprenant des parties de code logiciel pour mettre en oeuvre les étapes selon la revendication 6, lorsque le programme est exécuté sur le dispositif de traitement.
